# EUROPEAN PATENT APPLICATION

(11) **EP 2 000 880 A2**
(43) Date of publication of application: **10.12.2008**
(21) Application number: 08001735.3
(22) Date of filing: 30.01.2008
(51) Int. Cl.: G06F 1/20

(54) **System and method for moderating computer fan speed**

(30) Priority: 28.05.2007 CN 200710106390
(71) Applicant: ACER INCORPORATED, Taipei Hsien 221 (TW)
(72) Inventor: Huang, I Huei, Hsichih, Taipei Hsien 221 (TW)
(74) Representative: Epping - Hermann - Fischer

(57) **Abstract**

A system and a method for moderating computer fan speed are applied to a computer. The system comprises a temperature sensor, a fan and an adjustment circuit. The temperature sensor detects a temperature of a heat source to generate a temperature signal. The adjustment circuit receives the temperature signal, and extends the response time of the temperature signal to output an adjusted temperature signal to the fan, so that speed of the fan can be adjusted based on the adjusted temperature signal.

## Description

The present invention relates to a system and a method for moderating a computer fan speed, and more particularly to a system and a method for moderating a computer fan speed by extending the response time of a temperature signal.

As the operation clock of electronic components becomes increasingly faster, tremendous heat energies are produced during the operation of the electronic components, particularly microprocessors (CPU) which is usually operated with the highest clock in an electronic apparatus. To timely dissipate the heat and lower the temperature of the microprocessor, a computer device usually installs a fan to enhance the air flow, and the fan speed can be adjusted dynamically in response to the temperature of the microprocessor to achieve a better heat dissipating effect and a better power saving.

If the temperature of a microprocessor changes suddenly, when the microprocessor in an idle status receives a large quantity of high-priority operating instructions and has to raise the operation clock for the immediate processing, then the fan speed will be adjusted to its highest speed instantly such as an increase up to 5000 rounds per minute (rpm) in 0.5 second. After the instructions are processed, the operation clock of the microprocessor will drop, and the temperature of the microprocessor also drop, and thus the fan speed will be adjusted to a lower speed accordingly, such as a decrease to 2000 rpm within 0.5 second. Although the fan can provide a better heat dissipating effect when the fan is adjusted to a high speed, yet a spike noise causing nuisances to users is produced.

In view of the shortcomings of the prior art, the inventor of the present invention based on years of experience in the related industry to conduct extensive researches and experiments, and finally developed a system and a method for moderating computer fan speed in accordance with the present invention to overcome the aforementioned shortcomings.

It is a primary objective of the present invention to provide a system and a method for moderating computer fan speed to reduce spike noises.

To achieve the objective a system and a method according to the independent claims are provided. Advantageous embodiments are given by the sub claims.

According to an embodiment a system for moderating fan speed is provided. The system is in particular applicable for a computer device, comprising a temperature sensor, a fan and an adjustment circuit. The temperature sensor detects a temperature of a heat source and generates a temperature signal based on the temperature. The adjustment circuit is installed between the temperature sensor and the fan for receiving the temperature signal, extending the response time of the temperature signal, and outputting an adjusted temperature signal to the fan, such that the fan can adjust its speed based on the adjusted temperature signal.

According to an embodiment a method for moderating computer fan speed is provided.The method is in particular applicable for a computer device, the computer device comprising a fan and a temperature sensor. The temperature sensor detects a temperature of a heat source to generate a temperature signal. The method is characterized in that the response time of the temperature signal is extended to generate an adjusted temperature signal to the fan, and the fan adjusts its speed based on the adjusted temperature signal.

In summation of the description above, the system and method for moderating fan speed in accordance with the present invention have the following advantages:
(1) The system and method can lower the extent of changes of a fan speed to reduce nuisance caused by spike noises.
(2) The system and method does not affect the heat dissipating effect of a fan.

The invention and its embodiments will be more fully appreciated by reference to the following detailed description of presently preferred but nonetheless illustrative embodiments in accordance with the present invention when taken in conjunction with the accompanying drawings.

The figures are illustrating:
FIG. 1 is a block diagram of a system for moderating fan speed in accordance with the present invention;
FIG. 2 is a block diagram of a system for moderating fan speed in accordance with a preferred embodiment of the present invention;
FIGS. 3 and 4 are schematic views of examples of a temperature PWM signal and an adjusted temperature PWM signal of the present invention; and
FIG. 5 is a flow chart of a method for moderating computer fan speed in accordance with the present invention.

A system and a method for moderating computer fan speed in accordance with the present invention will now be described in more detail hereinafter with reference to the accompanying drawings that show various embodiments of the invention, in which like reference numerals refer to like parts.

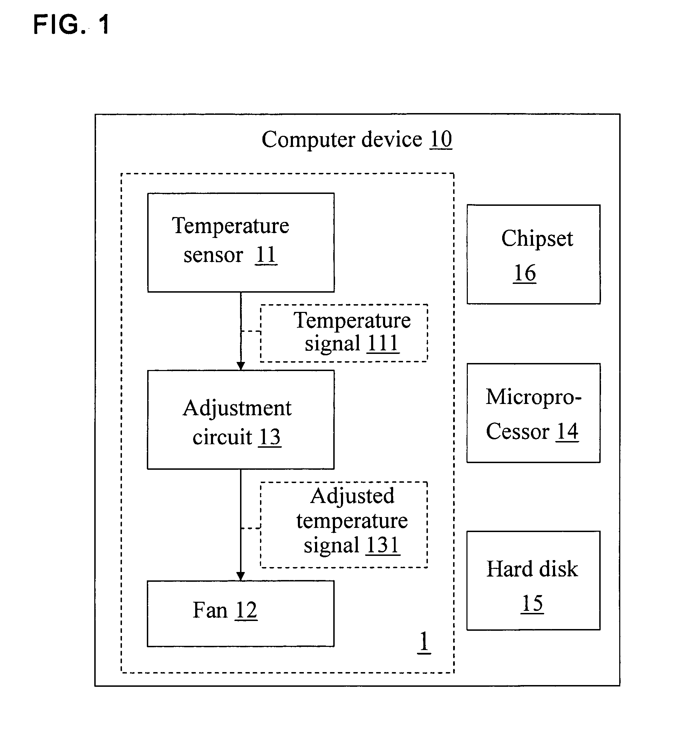

Referring to FIG. 1 for a block diagram of a system for moderating fan speed in accordance with the present invention, the system is applied in a computer device 10, and the system for moderating fan speed 1 comprises a temperature sensor 11, a fan 12 and an adjustment circuit 13. The temperature sensor 11 is provided for detecting a temperature of a heat source and generating a temperature signal 111 based on the temperature, and the heat source may come from a microprocessor 14, a hard disk 15 or a chipset 16 corresponding to the detected temperature. The adjustment circuit 13 is provided for receiving the temperature signal 111 and adjusting the temperature signal 111 to extend the response time of a temperature signal and output an adjusted temperature signal 131 to the fan 12. The fan 12 adjusts its speed based on the adjusted temperature signal 131, and the fan 12 assists the convection of air in the computer device 10 to speed up the heat dissipation.

The aforementioned temperature signal 111 is preferably a pulse width modulation (PWM) signal, and the adjustment circuit 13 further includes an integration circuit (or a lowpass circuit) and a pulse width modulation (PWM) circuit. The integration circuit comprises at least one resistor and at least one capacitor, so as the extent of response time of the temperature signal 111 can be adjusted by changing the value of the resistor and the capacitor.

The adjustment circuit 13 extends the response time of the temperature signal 111 to avoid nuisance produced by the fast speed of the fan when the temperature of the computer device 10 is changed suddenly. For instance, a large quantity of high-priority operating instructions is received when the microprocessor is in an idle status, the operation clock will be raised to complete the operation within a second, such that the temperature of the microprocessor may increase from 30 degrees to 50 degrees within 0.5 second. In the prior art, the speed of the fan 12 is increased from 2000 rpm to 5000 rpm within 0.5 second, and thus sudden change of the speed results in the appearance of noise. With the system for moderating fan speed according to an embodiment of the present invention, the adjustment circuit 13 adjusts the response time of the temperature signal 111 to preferably around four times as long, in one exemplary embodiment to four times as long. In other words, the adjusted temperature signal 131 received by the fan 12 represents that the temperature is increased from 30 degrees to 50 degrees within 2 seconds. Therefore, the speed of the fan 12 can be increased from 2000 rpm to 5000 rpm within 2 seconds, and the change of speed becomes moderate, and the noise can be reduced.

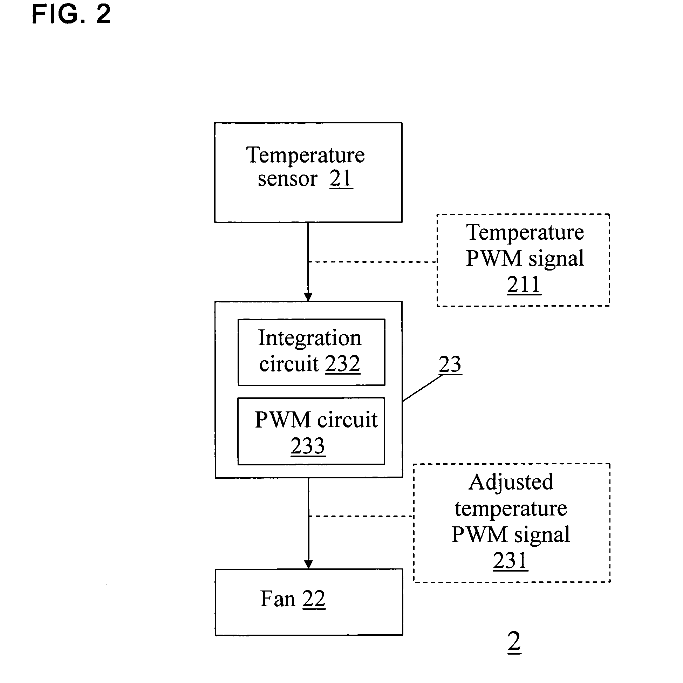

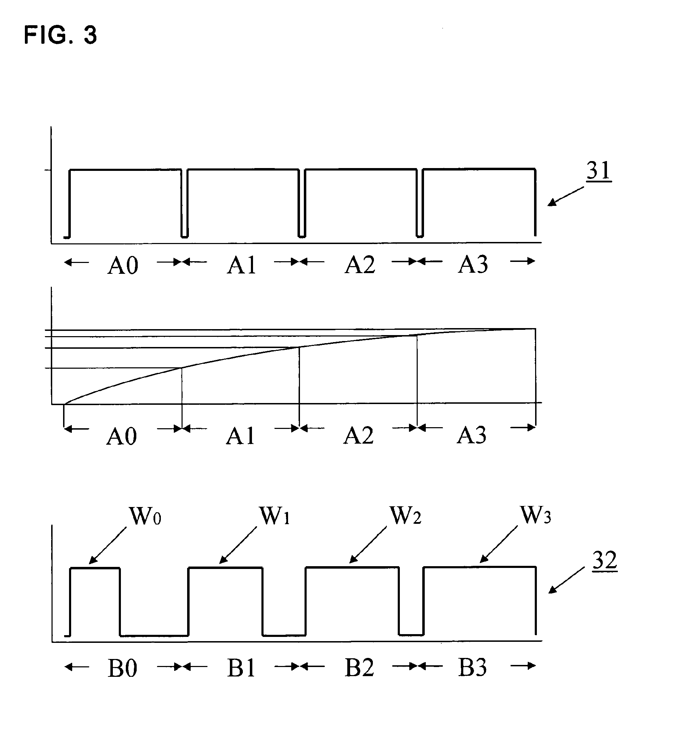

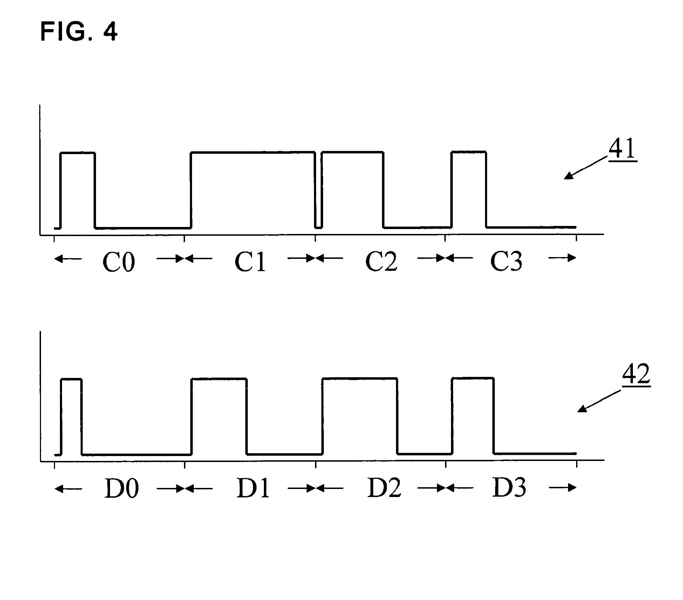

Referring to FIG. 2 for a block diagram of a system for moderating fan speed in accordance with a preferred embodiment of the present invention, the system for moderating fan speed 2 comprises a temperature sensor 21, a fan 22 and an adjustment circuit 23 having an integration circuit 232 and a PWM circuit 233. The temperature sensor 21 detects a temperature of a heat source and outputs a temperature PWM signal 211 based on the temperature, and the integration circuit 232 generates an integration voltage value based on the temperature PWM signal 211, and the PWM circuit 233 generates an adjusted temperature PWM signal 231 based on the integration voltage value, and the fan 22 adjusts its speed based on the adjusted temperature PWM signal 231. Referring to FIGS. 3 and 4 for schematic views of examples of a temperature PWM signal and an adjusted temperature PWM signal of the present invention, the temperature of a heat source detected by the temperature sensor 21 as shown in FIG. 3 is very high, and thus a temperature PWM signal 31 is outputted and the temperature PWM signal 31 includes a signal A0, a signal A1, a signal A2 and a signal A3 with a duty cycle close to 100%, and the amplitude of these signals is V3. The integration cycle of the integration circuit 232 is designed to be four times of the cycle of the temperature PWM signal, and thus the integration circuit 232 integrates an integration voltage value V0, V1, V2 and V3 based on the signal A0, signal A1, signal A2 and signal A3 respectively, and the PWM circuit 233 generates an adjusted temperature PWM signal 32 based on the integration voltage value. The adjusted temperature PWM signal 32 includes a signal B0, a signal B1, a signal B2 and a signal B3, and the pulse width W0 of the signal B0, the pulse width W1 of the signal B1, the pulse width W2 of the signal B2 and the pulse width W3 of the signal B3 are related to the integration voltage values V0, V1, V2 and V3 respectively. If the heat source continues maintaining its high temperature, the duty cycle of the signal B3 is also close to 100% after four cycles, and thus the fan can be adjusted to its maximum speed for decreasing the temperature of the heat source.

In FIG. 4, the temperature sensor 21 outputs a temperature PWM signal 41, including a signal C0, a signal C1, a signal C2 and a signal C3, wherein the duty cycle of the signal C1 has a big difference with the duty cycle of other signals. The fan 22 may produce noise if it adjusts the speed based on the temperature PWM signal 41. The adjustment circuit 23 generates an adjusted temperature PWM signal 42 after the procedure similar to the aforementioned procedure is processed. Compared with the temperature PWM signal 41, the change of pulse width of the adjusted temperature PWM signal 42 is not drastic, so as to effectively reduce the noise produced by the fan.

It is noteworthy to point out that the adjustment circuit 23 of this embodiment is used as an example for the illustration, but the present invention is not limited to such arrangement only, but any equivalent circuit also falls within the scope of the present invention.

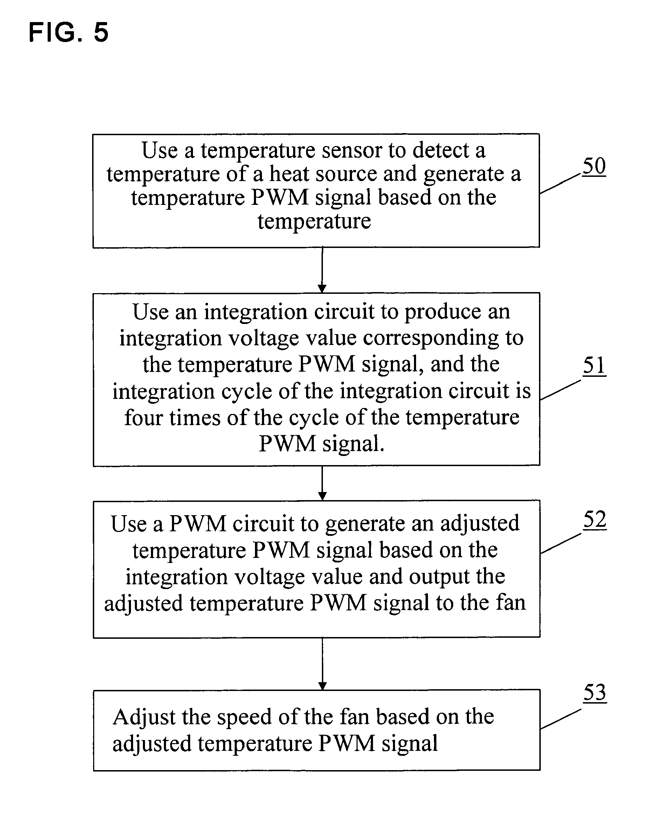

Referring to FIG. 5 for a method for moderating computer fan speed in accordance with the present invention, the method corresponds to FIG. 2 and comprises the steps of:
Step 50: using a temperature sensor 21 to detect a temperature of a heat source and generates a temperature PWM signal 211 based on the temperature, and the heat source may come from a microprocessor, a hard disk or a chipset;
Step 51: using the integration circuit 232 to generate the integration voltage value corresponding to the temperature PWM signal 211, wherein the integration cycle of the integration circuit 232 is designed to be four times of the cycle of the temperature PWM signal;
Step 52: using the PWM circuit 233 to generate an adjusted temperature PWM signal 231 based on the integration voltage value and output the adjusted temperature PWM signal 231 to the fan 22; and
Step 53: adjusting the speed of the fan 22 based on the temperature PWM signal 231.

By means of the integration circuit 232 and the PWM circuit 233, the response time of the temperature PWM signal 211 can be extended, and designers can change the integration cycle of the integration circuit 232 for adjusting the response time. For example, the resistance or the capacitance in the integration circuit 232 can be changed to achieve the desired extent of extending the response time.

While the invention has been described by way of examples and in terms of preferred embodiments, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A system for moderating fan speed, applicable for a computer device, comprising:
a temperature sensor, for detecting the temperature of a heat source and generating a temperature signal according to said temperature; and
a fan ; wherein the system further comprises:
an adjustment circuit, installed between said temperature sensor and said fan, for receiving the temperature signal and adjusting said temperature signal to extend the response time of said temperature signal and outputting said adjusted temperature signal to said fan, so that said fan adjusts its speed based on the adjusted temperature signal.

2. System according to claim 1, wherein said temperature signal is a pulse width modulation (PWM) signal.

3. System according to one of the previous claims, wherein said adjustment circuit includes an integration circuit.

4. System according to one of the previous claims, wherein said adjustment circuit includes a pulse width modulation (PWM) circuit.

5. System according to one of the previous claims, wherein said heat source is a microprocessor, a hard disk or a chipset.

6. A method for moderating computer fan speed, applicable for a computer device, the computer device comprises a fan and a temperature sensor, said temperature sensor detects the temperature of a heat source and generates a temperature signal based on said temperature, wherein the method comprises the steps of :
extending the response time of the temperature signal to generate an adjusted temperature signal to the fan, so that the fan adjusts its speed based on the adjusted temperature signal.

7. Method according to claim 6, wherein said temperature signal is a pulse width modulation (PWM) signal.

8. Method according to one of claims 6 or 7, wherein said heat source is a microprocessor, a hard disk or a chipset.
